# EUROPEAN PATENT SPECIFICATION

(11) **EP 3 091 286 B1**
(45) Date of publication and mention of the grant of the patent: **13.01.2021**
(21) Application number: 15166262.4
(22) Date of filing: 04.05.2015
(51) Int. Cl.: F23L 7/00, F23R 3/28, F23R 3/34, F23D 11/16

(54) **METHOD AND APPARATUS FOR OPERATING A COMBUSTION DEVICE**
VERFAHREN UND VORRICHTUNG ZUM BETREIBEN EINER VERBRENNUNGSVORRICHTUNG
PROCÉDÉ ET APPAREIL PERMETTANT DE FAIRE FONCTIONNER UN DISPOSITIF DE COMBUSTION

(43) Date of publication of application: 09.11.2016
(73) Proprietor: Ansaldo Energia IP UK Limited, London W1G 9DQ (GB)
(72) Inventor: Emberger, Norbert Walter, 5432 Neuenhof (CH); Meyer, Benjamin, 5415 Nussbaumen (CH); Bagusat, Frank, 5422 Würenlos (CH); Cuevas-Alvarez, Jose, 5400 Baden (CH)
(74) Representative: Bernotti, Andrea

(56) References cited:
- EP-A1- 2 565 539
- WO-A1-2004/010052
- US-A1- 2004 088 997
- US-A1- 2006 266 045

## Description

### TECHNICAL FIELD

The present invention generally relates to the field of combustion technology related to gas turbines. More in particular, the present invention refers to a method for operating a combustion device.

### BACKGROUND

As well known, an indispensable requisite for achieving an efficient combustion process is the avoidance of combustion instabilities.
Patent publication US 2012/0317986 discloses a method for operating a combustion device having a premix burner equipped with fuel staging and connected to a combustion chamber. The method includes continuously determining a pulsation level of the combustion-induced pulsations which occur in the combustion chamber and changing the fuel staging for lowering the pulsation level if the later exceeds a predetermined threshold. Furthermore, the fuel staging is reset to an undisturbed value corresponding to a respective operating point if the pulsation levels do not exceed the threshold for a predetermined time interval to achieve improved emission behaviour.
In sum, in US 2012/0317986 the pulsation control logic is used to adapt the fuel gas distribution within the burner in case of too high pulsations.

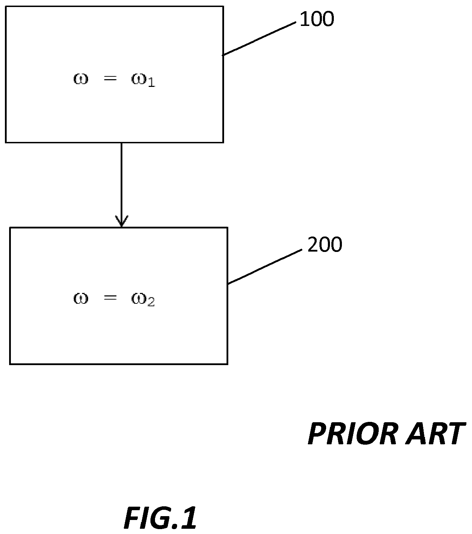

However, it is also important in the combustion process to monitor the total concentration of NO and NO₂ (generally referred to as NOₓ), which cannot exceed predetermined values set by law or local requirements.
On fuel oil operation water injection technology is used for lowering NOₓ emissions, whereby water is introduced in the combustion chamber or, alternatively, is emulsified with fuel oil prior to being injected into the combustion chamber. The ratio between the quantity of water introduced and the fuel is generally referred to as parameter ω.
An example of this technology is described in document WO2004/010052, disclosing a method and system having the features of the preambles of the independent claims. With reference to the block diagram depicted in Figure 1, it is shown a logic pertaining to the state of the art for the ω control during operation. Currently the ω is kept equal to a value ω₁ for a predefined time period (block 100) after starting the engine for cold ambient temperatures. Then, the ω is adjusted to the normal operation set point ω₂ (block 200). However, such control logic just keeps a single operating point which does not ensure optimum combustion behaviour in terms of NOₓ emissions and pulsations.
In fact, this way the NOₓ emissions are high during the complete warming up phase, and may be higher than the limit defined by law or local requirements. Moreover, after further warming up the pulsations may remain high and trigger protective events.
In general, with such arrangement it has proven to be difficult to adjust the engine for different ambient conditions.

### SUMMARY OF THE INVENTION

It is an object of the present invention to solve the aforementioned technical problem by providing a method for operating a combustion device as substantially defined according to independent claim 1.

It is a further object of the present invention to provide a system comprising a combustion device and an apparatus for operating a combustion device as substantially defined in independent claim 5.

According to an aspect of the invention, this object is obtained by a method for operating a combustion device, the combustion device comprising a combustion chamber, a water injection system configured to mix water to fuel in the combustion chamber and to adjust a parameter ω defined as a ratio between water and fuel, the parameter ω having a normal operating set point value ωₙₒₘ and a minimum value ωₘᵢₙ; and wherein the combustion device further comprises a controller for detecting flame-generated pulsations above a predefined threshold; wherein the method includes the steps of detecting a flame-generated pulsation event, calculating current parameter ω and:
- if current ω is greater than ωₘᵢₙ, reducing parameter ω and subsequently increasing it to ωₙₒₘ;
- if current ω is equal to ωₘᵢₙ, increasing parameter ω to ωₙₒₘ.

According to a preferred aspect of the invention, the parameter ω is adjusted based on a measured level of the detected flame-generated pulsation above the predefined threshold.

According to a preferred aspect of the invention, the parameter ω reduction is established substantially simultaneously with the detection of a flame-generated pulsation above the predefined threshold.

According to a preferred aspect of the invention, the parameter ω is increased as a linear function of time.

According to a further aspect of the invention, it is provided a system comprising a combustion device and an apparatus for operating said combustion device, the combustion device comprising a combustion chamber, a water
injection system configured to mix water to fuel in the combustion chamber and to adjust a parameter ω defined as a ratio between water and fuel, the parameter ω having a normal operating set point value ωₙₒₘ and a minimum value ωₘᵢₙ; and wherein the combustion device further comprises a controller for detecting flame-generated pulsations above a predefined threshold; wherein the apparatus comprises a control unit, connected to said water injection system and said pulsations controller, and configured to:
- receive an input signal from the controller correspondent to a level of a detected flame-generated pulsation above a predefined threshold;
- calculate current parameter ω;
- send an output signal to the water injection system, wherein the output signal corresponds to a command for reducing current parameter ω and subsequently increasing it to ωₙₒₘ if current ω is greater than ωₘᵢₙ, or increasing parameter ω to ωₙₒₘ if current ω has reached ωₘᵢₙ.

According to a preferred aspect of the invention, the control unit is configured to adjust parameter ω based on a measured level of the detected flame-generated pulsation above a predefined threshold.

According to a preferred aspect of the invention, the control unit is configured to reduce parameter ω substantially simultaneously with the detection of a flame-generated pulsation above a predefined threshold.

According to a preferred aspect of the invention, the control unit is configured such that parameter ω is increased as a linear function of time.

As it will be clear by the description of exemplary embodiments of the invention, presented as non-limiting examples, with the innovative method and apparatus, involving dynamic pulsation control logic, the co of the water/oil emulsion at the fuel oil lances is adapted, while optimum pulsation and NOₓ limits are guaranteed. Advantageously, a pulsation protective load shedding (PLS) is avoided by quickly adjusting the parameter co (water/oil ratio) in case of too high combustion pulsation levels from the standard operation set point. This implies that the dynamic pulsation control logic (P.C.L.) is activated in case the high frequency pulsation level exceeds a predetermined threshold value and a control unit adjusts the ω, preferably in a stepwise manner, until acceptable and optimum pulsation levels are reached or a maximum reduction of the co is performed. The co reduction is limited in order to ensure that NOₓ emissions are not exceeding legal limits and because the pulsations may increase again due to too low ω.
Additionally, in case the co is reduced by a high pulsation spike, i.e. because of cold engine, low ambient temperature or after start-up in the morning, the co may be ramped up slowly again to the standard operation set point, particularly as a linear function of time. In case the pulsation level exceeds the trigger limit again during the ω ramping up, the PCL controller may be triggered again and the process repeated.
When the engine is loaded up and the pulsation level exceeds a certain threshold, the co is reduced, preferably in one step, that is substantially simultaneously with the detection of the spike, and then slowly increased again (as a linear function of time having a predefined tilt) until reaching the normal operating set point. If during the co ramping up another pulsation is detected, then a subsequent ω reduction will be carried out. A maximum reduction of the ω (which defines a ωₘᵢₙ) is ensured in order not to trigger other pulsation events.
The ω reduction involves a pulsation reduction but also a NOₓ increase.
According to preferred embodiments of the present invention, the warming up phase is advantageously taken into consideration in the new control logic, so several ω settings won't be needed anymore.
The engine is always adjusting to the lowest possible NOₓ, taking into account several ambient conditions. Furthermore, ωₘᵢₙ and ω stepwise reduction are calculated/determined for a given relative load and ambient temperature, this way ensuring to remain below the NOₓ and pulsation limits.

### BRIEF DESCRIPTION OF THE DRAWINGS

The objects, advantages and other features of the present invention will become more apparent upon reading of the following non-restrictive description of preferred embodiments thereof, given for the purpose of exemplification only, with reference to the accompany drawing, through which similar reference numerals may be used to refer to similar elements, and in which:
Figure 1 shows a simplified block diagram for a method of operating a combustion device according to the prior art;
Figure 2 shows a simplified diagram of an apparatus for operating a combustion device according to the present invention;
Figure 3 shows a block diagram depicting a method for operating a combustion device according to the present invention;
Figure 4 depicts on top view a graph showing correlations between parameter ω and pulsations level for different operating scenarios, and on bottom view a graph showing the adjustment of parameter ω as a function of time according the method of the present invention;
Figure 5 and 6 depict graphs illustrating the correlations between ω, pulsations and NOₓ emissions for different operating scenarios.

An exemplary preferred embodiment will be now described with reference to the aforementioned drawings.

### DETAILED DESCRIPTION OF THE INVENTION

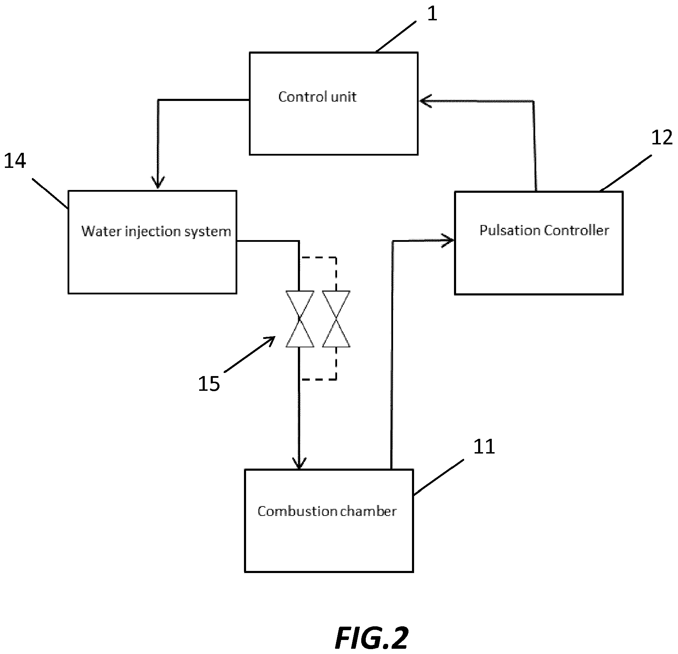

With reference to figure 2, it is shown a simplified diagram of an apparatus 1 for operating a combustion device according to the present invention.
The combustion device, to which the apparatus 1 according to the invention is associated, comprises a combustion chamber 11. The combustion chamber may comprise a premix burner equipped with fuel stagings.
Moreover, the combustion device comprises a water injection system 14 configured to mix/adjust a quantity of water to the fuel in the combustion chamber 11, thus determining a parameter ω which is defined as the ratio between water and fuel. The introduction of water into the combustion chamber may be operated by means of one or several intake valves 15.
During normal operation parameter ω, in other words the amount of water introduced in the combustion for a given fuel quantity, is set to a normal operating set point ωₙₒₘ. The apparatus 1 according to the invention comprises a control unit 1 which is connected to the pulsation controller 12 and the water injection system 14.
In the event that the controller 12 detects a flame-generated pulsation increase occurring in the combustion chamber 11 having a level which is above a predefined threshold, an input signal is sent to the control unit 1 corresponding to the detected pulsation, being above the threshold. Then, the control unit calculates the current parameter ω and sends an output signal to the water injection system 14 corresponding to a command for adjusting ω.
Particularly, if the current ω is above a minimum value ωₘᵢₙ, then ω is reduced and, subsequently, increased back to the operating set point ωₙₒₘ.
Preferably, the amount of ω reduction after the detection of a pulsation event is correlated to the magnitude of the detected pulsation level.
According to preferred embodiments, the reduction of ω which follows the pulsation detection, may be established substantially simultaneously with the occurrence of the detection of the pulsation being above the predetermined threshold. In other words, the new parameter ω is imposed by the water injection system 14 in one step/operation. Once the ω has been reduced, it is subsequently increased gradually, particularly as a linear function of time, thus ramp-shaped. In other words, the introduction of water carried out by the water injection system is increased.
If, after the detection of a pulsation event, the current ω has reached ωₘᵢₙ, then the ω is only increased in a manner as above described.
If during the ramping up of the ω a further pulsation event is detected, then the process is repeated.

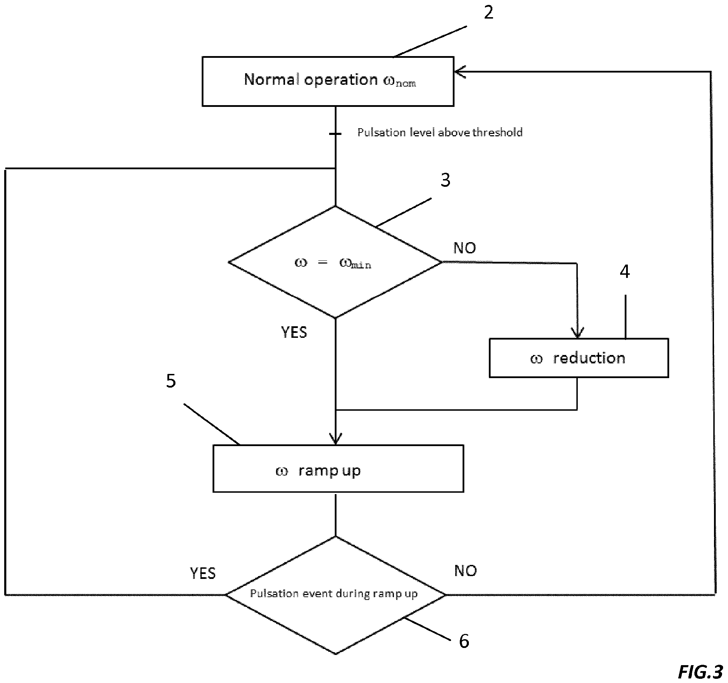

Making now reference to figure 3, it is depicted a block diagram showing the method for operating a combustion device according to the present invention.

In particular, block 2 identifies the normal operation. If a pulsation level above a predefined threshold is detected, then at block 3 the current value of ω is calculated/verified. If ω is above ωₘᵢₙ, then the amount of water introduced in the combustion chamber is reduced, as indicated by block 4 (ω reduction). Preferably, the amount of the reduction is based on the measured level of the detected pulsation. Furthermore, the ω reduction is carried out substantially simultaneously to the detection of the pulsation, that means, that the new parameter ω is achieved in one step/operation, as explained above. After the reduction of ω, the latter is then increased, preferably stepwise, to the normal operating set point (block 5). If during the ramp up of the ω, another pulsation event is registered, the process is then repeated (block 6).

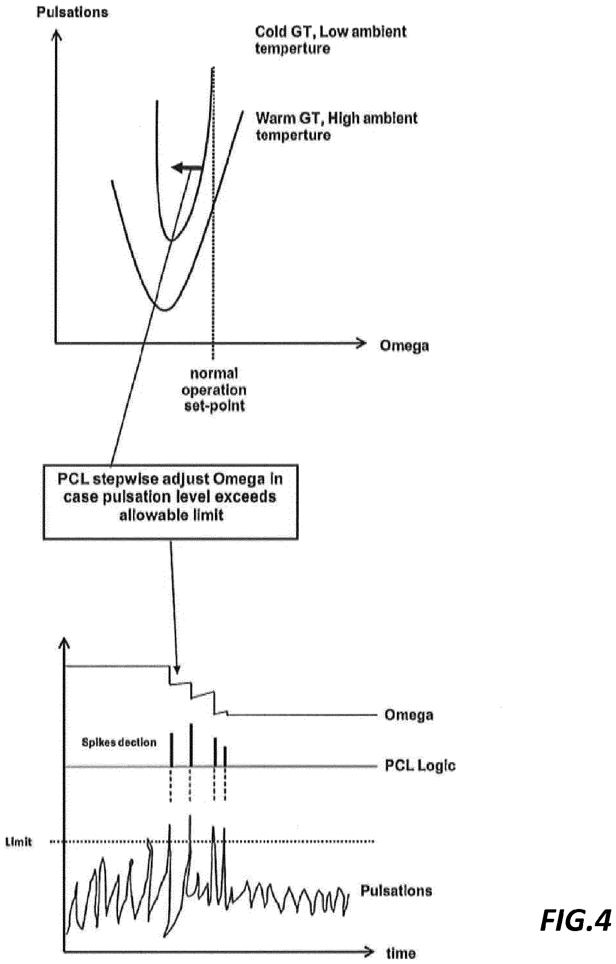

With reference to figure 4 top, it is depicted a correlation between parameter ω and level of pulsations for two operating scenarios. The graph shows that pulsation has a parabolic trend as a function of ω. In particular, the extent of the curve narrows for low ambient temperatures (or start-up phase, when the gas turbine is still cold) with respect to high ambient temperatures (or normal operating state).
The dashed line identifies the ω used in the normal operating set point, which is set as a compromise between an acceptable level of pulsation and NOₓ emissions. It is also clear from the graph that the ω for the normal operating set point depends on the operating conditions, for example ambient temperature and start-up phase. Turning to figure 4 bottom, it is depicted a graph showing how ω is adjusted as a function of time in the event of a detected pulsation having a level above a predefined threshold.
In particular, the graph shows the level of registered pulsations occurring in the combustion chamber. Until pulsations remain below the threshold (indicated as "limit" in the graph), then the ω is kept constant and equal to the normal operating set point. When a pulsation going beyond the limit is detected, the ω is reduced by the water injection system in one step, this way resulting in a vertical line on the co(t) function. After the ω has been set to a new value, then it is slowly increased . This is indicated by the ramp-shaped line on the co(t) function. The graph shows that, during the ω ramp-up, another pulsation event is detected, then the process is repeated.

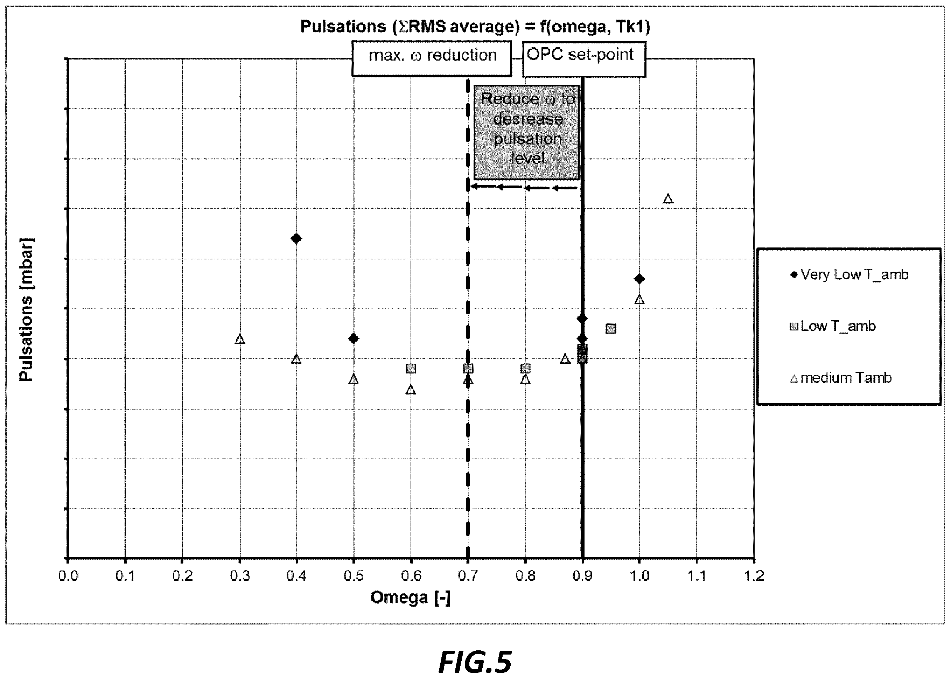

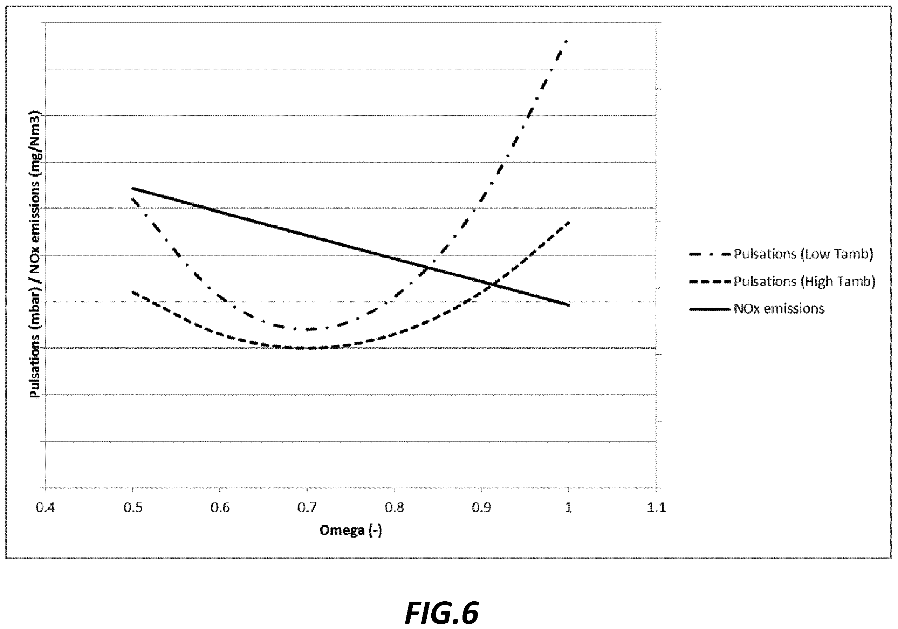

Next figure 5 depicts, similarly to figure 4 top, a graph better detailing the relationship between ω and pulsations with reference to low ambient temperatures. Finally, last figure 6 shows the relationship between ω and pulsations and between ω and NOₓ emissions.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are within the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A method for operating a combustion device, the combustion device comprising:
- a combustion chamber (11);
- a water injection system (14) configured to mix water to fuel in the combustion chamber (11) and to adjust a parameter ω defined as a ratio between water and fuel, said parameter ω having an operating set point value ωₙₒₘ and a minimum value ωₘᵢₙ; and
- a controller (12) for detecting flame-generated pulsations above a predefined threshold;
the method including the step of:
- detecting a flame-generated pulsation event;
and being **characterised in that** it further includes the following steps:
- calculating a current parameter ω and:
- if the current parameter ω is greater than ωₘᵢₙ, reducing parameter ω and subsequently increasing it to ωₙₒₘ;
- if the current parameter ω is equal to ωₘᵢₙ, increasing parameter ω to ωₙₒₘ.

2. The method according to the preceding claim, wherein said parameter ω is adjusted based on a measured level of the detected flame-generated pulsation above a predefined threshold.

3. The method according to any of the preceding claims, wherein said parameter ω reduction is established substantially simultaneously with the detection of a flame-generated pulsation above a predefined threshold.

4. The method according to any of the preceding claims, wherein parameter ω is increased as a linear function of time.

5. System comprising a combustion device and an apparatus (1) for operating the combustion device; wherein the combustion device comprises:
- a combustion chamber (11),
- a water injection system (14) configured to mix water to fuel in the combustion chamber 11 and to adjust a parameter ω defined as a ratio between water and fuel, said parameter ω having an operating set point value ωₙₒₘ and a minimum value ωₘᵢₙ; and
- a controller (12) for detecting flame-generated pulsations above a predefined threshold;
wherein the apparatus (1) comprises a control unit (1) connected to said water injection system (14) and said controller (12), said control unit (1) is configured to:
- receive an input signal correspondent to a level of a detected flame-generated pulsation above a predefined threshold;
the apparatus being **characterised in that** said control unit (1) is further configured to:
- calculate a current parameter ω;
- send an output signal to said water injection system (14), wherein said output signal corresponds to a command for reducing parameter ω and subsequently increasing it to ωₙₒₘ if the current parameter ω is greater than ωₘᵢₙ, or increasing parameter ω to ωₙₒₘ if the current parameter ω is equal to ωₘᵢₙ.

6. System according to the preceding claim, wherein said control unit (1) is configured to adjust parameter ω based on a measured level of the detected flame-generated pulsation above a predefined threshold.

7. System according to claims 5 or 6, wherein said control unit (1) is configured to reduce parameter ω substantially simultaneously with the detection of a flame-generated pulsation above a predefined threshold.

8. System according to any of the claims 5-7, wherein said control unit (1) is configured such that parameter ω is increased as a linear function of time.

## Patentansprüche

1. Verfahren für den Betrieb einer Verbrennungsvorrichtung, welche Verbrennungsvorrichtung enthält:
- eine Brennkammer (11);
- ein Wassereinspritzsystem (14), das dafür konfiguriert ist, in der Brennkammer (11) dem Brennstoff Wasser beizumischen und einen als Verhältnis zwischen Wasser und Brennstoff definierten Parameter ω einzustellen, wobei der Parameter ω einen Betriebssollwert ωₙₒₘ und einen Mindestwert ωₘᵢₙ hat; und
- eine Steuereinrichtung (12) zum Erfassen von durch die Flamme erzeugten Pulsationen über einem vorbestimmten Schwellenwert;
wobei das Verfahren den Schritt enthält:
- Erfassen eines durch die Flamme erzeugten Pulsationsereignisses;
und **dadurch gekennzeichnet ist, dass** es ferner die folgenden Schritte enthält:
- Berechnen eines aktuellen Parameters ω und:
- wenn der aktuelle Parameter ω größer als ωₘᵢₙ ist, Reduzieren des Parameters ω und anschließend Erhöhen desselben auf ωₙₒₘ;
- wenn der aktuelle Parameter ω gleich ωₘᵢₙ ist, Erhöhen des Parameters ω auf ωₙₒₘ.

2. Verfahren nach dem vorhergehenden Anspruch, wobei der Paramter ω auf der Grundlage eines gemessenen Niveaus der erfassten durch die Flamme erzeugten Pulsationen über einem vorbestimmten Schwellenwert eingestellt wird.

3. Verfahren nach einem der vorhergehenden Ansprüche, wobei die Reduzierung des Parameters ω im Wesentlichen gleichzeitig mit der Erfassung einer durch die Flamme erzeugten Pulsation über einem vorbestimmten Schwellenwert erfolgt.

4. Verfahren nach einem der vorhergehenden Ansprüche, wobei der Parameter ω als eine lineare Funktion der Zeit erhöht wird.

5. System, enthaltend eine Verbrennungsvorrichtung und eine Vorrichtung (1) für den Betrieb der Verbrennungsvorrichtung; wobei die Verbrennungsvorrichtung enthält:
- eine Brennkammer (11);
- ein Wassereinspritzsystem (14), das dafür konfiguriert ist, in der Brennkammer (11) dem Brennstoff Wasser beizumischen und einen als Verhältnis zwischen Wasser und Brennstoff definierten Parameter ω einzustellen, wobei der Parameter ω einen Betriebssollwert ωₙₒₘ und einen Mindestwert ωₘᵢₙ hat; und
- eine Steuereinrichtung (12) zum Erfassen von durch die Flamme erzeugten Pulsationen über einem vorbestimmten Schwellenwert;
wobei die Vorichtung (1) eine mit dem Wassereinspritzsystem (14) und der Steuereinrichtung (12) verbundene Steuereinheit (1) enthält, welche Steuereinheit (1) dafür konfiguriert ist,
- ein einem Niveau einer erfassten durch die Flamme erzeugten Pulsation über einem vorbestimmten Schwellenwert entsprechendes Eingangssignal zu empfangen;
wobei die Vorrichtung **dadurch gekennzeichnet ist, dass** die Steuereinheit (1) ferner dafür konfiguriert ist,
- einen aktuellen Parameter ω zu berechnen;
- ein Ausgangssignal an das Wassereinspritzsystem (14) zu senden, wobei das Ausgangssignal einem Befehl zum Reduzieren des Parameters ω und zum anschließenden Erhöhen desselben auf ωₙₒₘ entspricht, wenn der aktuelle Parameter ω größer als ωₘᵢₙ ist, oder Erhöhen des Parameters ω auf ωₙₒₘ, wenn der aktuelle Parameter ω gleich ωₘᵢₙ ist.

6. System nach dem vorhergehenden Anspruch, wobei die Steuereinheit (1) dafür konfiguriert ist, den Paramter ω auf der Grundlage eines gemessenen Niveaus der erfassten durch die Flamme erzeugten Pulsationen über einem vorbestimmten Schwellenwert einzustellen.

7. System nach den Ansprüchen 5 oder 6, wobei die Steuereinheit (1) dafür konfiguriert ist, den Parameter ω im Wesentlichen gleichzeitig mit der Erfassung einer durch die Flamme erzeugten Pulsation über einem vorbestimmten Schwellenwert zu reduzieren.

8. System nach einem der Ansprüche 5-7, wobei die Steuereinheit (1) so konfiguriert ist, dass der Parameter ω als eine lineare Funktion der Zeit erhöht wird.

## Revendications

1. Procédé de gestion d'un dispositif de combustion, le dispositif de combustion comprenant :
- une chambre de combustion (11) ;
- un système d'injection d'eau (14) configuré pour mélanger de l'eau à un combustible dans la chambre de combustion (11) et pour ajuster un paramètre ω défini comme étant un rapport entre l'eau et le combustible, ledit paramètre ω ayant une valeur de point de consigne de fonctionnement ωₙₒₘ et une valeur minimale ωₘᵢₙ ; et
- un dispositif de commande (12) pour détecter des pulsations générées par la flamme au-dessus d'un seuil prédéfini ;
le procédé comprenant l'étape de :
- détection d'un événement de pulsation générée par la flamme ;
et étant **caractérisé en ce qu'**il comprend en outre les étapes suivantes :
- calcul d'un paramètre actuel ω et :
• si le paramètre actuel ω est supérieur à ωₘᵢₙ, réduction du paramètre ω et ensuite augmentation de celui-ci à ωₙₒₘ ;
• si le paramètre actuel ω est égal à ωₘᵢₙ, augmentation du paramètre ω à ωₙₒₘ.

2. Procédé selon la revendication précédente, dans lequel ledit paramètre ω est ajusté sur la base d'un niveau mesuré de la pulsation générée par la flamme détectée au-dessus d'un seuil prédéfini.

3. Procédé selon l'une quelconque des revendications précédentes, dans lequel ladite réduction du paramètre ω est établie de façon sensiblement simultanée avec la détection d'une pulsation générée par la flamme au-dessus d'un seuil prédéfini.

4. Procédé selon l'une quelconque des revendications précédentes, dans lequel le paramètre ω est augmenté selon une fonction linéaire du temps.

5. Système comprenant un dispositif de combustion et un appareil (1) pour actionner le dispositif de combustion ; dans lequel le dispositif de combustion comprend :
- une chambre de combustion (11) ;
- un système d'injection d'eau (14) configuré pour mélanger de l'eau à un combustible dans la chambre de combustion 11 et pour ajuster un paramètre ω défini comme étant un rapport entre l'eau et le combustible, ledit paramètre ω ayant une valeur de point de consigne de fonctionnement ωₙₒₘ et une valeur minimale ωₘᵢₙ ; et
- un dispositif de commande (12) pour détecter des pulsations générées par la flamme au-dessus d'un seuil prédéfini ;
dans lequel l'appareil (1) comprend une unité de commande (1) connectée audit système d'injection d'eau (14) et audit dispositif de commande (12), ladite unité de commande (1) étant configurée pour :
- recevoir un signal d'entrée correspondant à un niveau d'une pulsation générée par la flamme détectée au-dessus d'un seuil prédéfini ;
l'appareil étant **caractérisé en ce que** ladite unité de commande (1) est en outre configurée pour :
- calculer un paramètre actuel ω ;
- envoyer un signal de sortie audit système d'injection d'eau (14), dans lequel ledit signal de sortie correspond à une commande pour réduire le paramètre ω et ensuite augmenter celui-ci à ωₙₒₘ si le paramètre actuel ω est supérieur à ωₘᵢₙ, ou augmenter le paramètre ω à ωₙₒₘ si le paramètre actuel ω est égal à ωₘᵢₙ.

6. Système selon la revendication précédente, dans lequel ladite unité de commande (1) est configurée pour ajuster le paramètre ω sur la base d'un niveau mesuré de la pulsation générée par la flamme détectée au-dessus d'un seuil prédéfini.

7. Système selon les revendications 5 ou 6, dans lequel ladite unité de commande (1) est configurée pour réduire le paramètre ω de façon sensiblement simultanée avec la détection d'une pulsation générée par la flamme au-dessus d'un seuil prédéfini.

8. Système selon l'une quelconque des revendications 5 à 7, dans lequel ladite unité de commande (1) est configurée de sorte que le paramètre ω est augmenté sous la forme d'une fonction linéaire du temps.
